# EUROPEAN PATENT APPLICATION

(11) **EP 4 389 328 A1**
(43) Date of publication of application: **26.06.2024**
(21) Application number: 22216093.9
(22) Date of filing: 22.12.2022
(51) Int. Cl.: B23B 27/10, B23B 29/02

(54) **COOLANT REFLECTOR AND TURNING TOOL COMPRISING A COOLANT REFLECTOR**

(71) Applicant: AB Sandvik Coromant, 811 81 Sandviken (SE)
(72) Inventor: WICKSTRÖM, David, 811 81 Sandviken (SE); LÖF, Ronnie, 811 81 Sandviken (SE); WIKBLAD, Krister, 811 81 Sandviken (SE); JOHANSSON, Adam, 811 81 Sandviken (SE)
(74) Representative: Sandvik

(57) **Abstract**

The present invention relates to a coolant reflector (12, 13, 14) for a turning tool and a turning tool comprising such coolant reflector. The turning tool comprises a tool body (1) including a front end (2), a rear end (3), a peripheral surface (4) connecting the front end and the rear end, and a central axis (C) extending from the front end to the rear end. The turning tool further comprises a cutting insert (5, 6), or a seat for accommodating a cutting insert, arranged in the tool body, and a coolant channel (9) extending at least partly through the tool body (1) for supplying coolant to the cutting insert (5,6), the coolant channel being in fluid communication with an exit opening (11) in the tool body. The coolant reflector includes a reflecting structure (15, 16, 25) arranged to receive coolant emerging from the exit opening (11) in the tool body (1) and reflect the coolant at least partly rearward and towards the cutting insert (5, 6).

## Description

### TECHNICAL FIELD

The invention relates to metal cutting, and in particular to turning operations wherein a turning tool is used for machining a rotating workpiece.

### BACKGROUND ART

Within the field of metal cutting, a turning tool may be used for machining the surface of a rotating workpiece, for example the inner surface of a hole in the workpiece. In such machining operations, the tool may extend along a central axis that is parallel to the rotational axis of the workpiece.

When machining inside a hole of a rotating workpiece, the chips produced, if remaining inside the hole, could adversely affect the results of the machining process.

When machining within closed holes, the chips must be evacuated the same way from which the turning tool enters the hole. Coolant is sometimes applied to the cutting zone which may help evacuating the chips to some extent. EP 1806191 discloses a turning tool having a chip flute for assisting chip evacuation and wherein coolant emerges from an opening in the front of the turning tool located on the side of the turning tool that is opposite the insert seat. Thereby, the main flow of coolant is supposed to go, via the bottom of the closed hole, towards the cutting insert and the chip flute. However, this may not provide efficient evacuation of chips in all applications, for example when machining deep holes where the distance between the cutting tool and the bottom of the hole is large. When machining inside open-ended holes, the chips may be evacuated through the opening opposite where the turning tool enters the hole. However, this could cause other problems, for example that coolant is spread in an uncontrolled manner to places where it is not wanted and, as an example, end up on the workshop floor.

Hence, there is a need for solutions providing improved coolant distribution and evacuation of chips in internal turning operations.

### SUMMARY

It is an object of the present invention to mitigate the shortcomings of the prior art and to provide a turning tool in which improved chip evacuation is achieved when machining inside a hole in a rotating workpiece. Another object of the invention is to achieve a controlled distribution of coolant for a turning tool such as to mitigate any adverse effects caused by coolant being spread in the machining environment.

Thus, according to a first aspect, the invention relates to a turning tool comprising a tool body including a front end, a rear end, a peripheral surface connecting the front end and the rear end, and a central axis extending from the front end to the rear end. The turning tool further comprises a cutting insert, or a seat for accommodating a cutting insert, arranged in the tool body, and a coolant channel extending at least partly through the tool body for supplying coolant to the cutting insert, the coolant channel being in fluid communication with an exit opening in the tool body. The turning tool further comprises a coolant reflector including a reflecting structure arranged to receive coolant emerging from the exit opening in the tool body and reflect the coolant at least partly rearward and towards the cutting insert.

Thereby, coolant is at least to some extent directed rearward towards the cutting insert, which, if machining inside a hole of a rotating workpiece, corresponds to a direction out from the machined hole. As a consequence, chips produced are flushed out from the hole. This is particularly useful when machining within an open ended hole (a through-hole), or a deep blind hole, in which no bottom surface of the hole contributes to re-direct coolant rearward towards the cutting insert and further out from the hole.

A "turning tool" should be understood as a cutting tool used for machining a rotating workpiece. Such tool, in the context of machining the internal surface of a hole in a rotating workpiece, is sometimes also referred to as a boring bar. The central axis of such turning tool is parallel, but usually not coaxial, with the rotation axis of the workpiece, and the turning tool can be moved radially within the hole to engage the surface of the workpiece. Thereby, in contrast to drilling or boring using rotating tools, a varying internal profile of the hole can be machined by changing the radial displacement between the turning tool and the rotation axis of the workpiece. The turning tool is connectable to a machine tool, for example a CNC lathe or other machine tool suitable for turning operations.

The coolant reflector may be arranged at the front end of the tool body of the turning tool. Thus, at least some part of the coolant reflector may be attached at the front end. For example, a threaded member of the coolant reflector may be attached to a correspondingly threaded member at the front end of the tool body. As another example, a part of the coolant reflector that includes at least one through-hole may be arranged against the front end, and the coolant reflector may then be connected to the front end by one or more screws, or other fastening elements, extending through the through-holes and into (threaded) holes formed in the front end of the tool body.

The cutting insert, or the seat for accommodating a cutting insert, may be located at the front end of the tool body, or more precisely arranged in the tool body at an interface between the front end and the peripheral surface of the tool body. It is also envisaged that the cutting insert, or the seat for accommodating a cutting insert, is located in the peripheral surface further towards the rear, but in any case closer to the front end than to the rear end.

The coolant channel may extend through the tool body at least partly along the central axis of the tool body, or along a direction that is parallel to the central axis of the tool body.

The exit opening in the tool body (from which coolant emerge towards the reflecting structure), may be located at the front end of the tool body, for example at a location of the central axis of the tool body. Thus, as an example, the exit opening may be formed by a coolant channel formed coaxially with the central axis of the tool body that continue straight through the tool body all the way to the external surface at the front end of the tool body. As a further example, a coolant channel portion that is inclined with respect to, and diverging from, a coolant channel formed coaxially with the central axis of the tool body, may open in the front end of the tool body at a location that is radially spaced from the central axis of the tool body. Multiple such coolant channel portions may diverge from the coolant channel. Accordingly, the tool body may include further exit openings that are in fluid communication with the coolant channel. More than one of the exit openings may be directed towards the reflecting structure. Alternatively, different exit openings may be directed towards different reflecting structures. The multiple reflecting structures may either be comprised in a single coolant reflector, or in separate coolant reflectors arranged at the turning tool.

Hence, according to some embodiments, the tool body comprises two exit openings with which the coolant channel is in fluid communication, and the coolant reflector comprises a separate reflecting structure for each of the two exit openings.

All exit openings in fluid communication with the coolant channel are not necessarily directed towards a reflecting structure of a coolant reflector. Some openings may be arranged to direct coolant towards other regions of the tool body, for example straight towards the cutting insert, or to an area in the vicinity of the cutting insert. Coolant may also be directed partly rearward via openings in the peripheral surface of the tool body via diverging coolant channel portions extending from the coolant channel but inclined towards the rear end, such that coolant emerging therefrom hits the wall of the machined hole at a location rearward of the cutting inserts. Coolant directed in such way may further improve the evacuation of chips out from the hole.

The reflecting structure may be located in front of the front end of the tool body. In other words, all parts constituting the reflecting structure may be located in front of the front end (even if other parts of the coolant reflector may be located differently). Thereby, the coolant received by the reflecting structure may be reflected in a direction that is both rearward and towards the cutting insert even when the cutting insert is arranged at the front end of the tool body.

"Rearward" as used herein when referring to the direction in which coolant is reflected, is not necessarily a direction straight towards the rear end of the tool body, but refers to any direction towards a rear end plane, i.e. a plane through the rear end which is perpendicular to the central axis. In other words, a rearward direction should be understood as a direction that has at least a component in a rearward direction parallel to the central axis.

In this context, it should be emphasized that the coolant reflector according to the present disclosure does not merely re-direct coolant from a forward axial direction to a radial outward direction towards a cutting element, but in a direction that is both rearward, i.e. at least slightly inclined with respect to a radial direction such as to approach a rear end plane, and towards the cutting insert.

According to some embodiments, the coolant reflector extend radially, with respect to the central axis, a distance that is less than the maximum radial extension of the tool body at the location along the central axis where the cutting insert or seat for accommodating a cutting insert is arranged, and in particular less than the maximum radial extension of the tool body at the interface between the peripheral surface and the front end.

Obviously, the coolant reflector has to be located radially inwards from the cutting edge of the cutting insert, such as not interfering in the cutting process. By having a radial extension that is less than the maximum radial extension of the peripheral surface of the tool body, it is assured that the coolant reflector will never limit the moveability of the turning tool in a radial direction, i.e. such that the maximum radial cutting depth is not affected by the presence of the coolant reflector. The radial distance that the coolant reflector extends may be less than the maximum radial extension of the tool body at *any* location along the central axis of the tool body, at least at the portion of the tool body that is intended to be located inside the hole during an internal turning process. Accordingly, the maximum width of the coolant reflector may be smaller than the maximum width of the tool body.

According to some embodiments, the reflecting structure includes a surface that is oblique to the central axis and inclined towards the rear. Thereby, coolant will be efficiently reflected in a direction at least partly rearward. The surface may be flat or curved or include multiple segments of which some are flat and some are curved. According to some embodiments, the reflecting structure includes a concave rearward facing surface, which may be particularly efficient in directing coolant rearward. Such concave surface may for example have a shape corresponding to the inner surface of a hemisphere or part of a sphere.

The reflecting structure may be arranged to direct coolant mainly towards the cutting insert or the seat for accommodating a cutting insert. This is where the chips are formed, and directing the coolant towards such location might be beneficial for evacuating the chips. In other embodiments, the reflecting structure may be arranged to evenly distribute coolant around the peripheral surface of the tool body, i.e. around the perimeter of the machined hole. This may be sufficient, or even beneficial in some applications, since chips may end up remaining at various locations around the perimeter of the machined hole.

According to some embodiments, the coolant reflector includes a shaft extending in the axial direction between, and connecting, the front end of the tool body and the reflecting structure. The shaft may include an internal conduit and be connected to the front end of the tool body such that coolant emerging from the exit opening in the tool body passes through the internal conduit in the shaft towards the reflecting structure. This may be achieved by connecting the shaft, for example via a threaded connection, directly to the exit opening in the tool body. The reflecting structure may by a concave rearward facing surface having the form of the inner surface of a hemisphere, and the shaft may be connected at the center of such hemispherical surface. Thereby, coolant received at the reflecting structure via the internal conduit in the shaft may be evenly distributed around the hemispherical surface and then stream further rearward towards the tool body and the cutting insert or the seat for accommodating a cutting insert. Alternatively, the reflecting structure may include certain geometrical features, such as grooves, for directing coolant rearward mainly towards specific points on the peripheral surface, e.g. towards the cutting insert.

According to other embodiments, the coolant reflector does not comprise any shaft but instead a contact surface configured to be mounted flush against at least a portion of the front end of the tool body, wherein the reflecting structure is formed by a recess in the contact surface located such that coolant emerging from the exit opening enters the recess. The recess is preferably formed at the border of the contact surface such that the recess forms a passageway from the exit opening in the tool body to the exterior of the tool body. The bottom of the recess may have a concave shape, for example formed as part of a hemisphere, and arranged such that coolant received in the recess is reflected rearward and towards the cutting insert or the seat for accommodating a cutting insert. The recess arranged to receive coolant emerging from the exit opening in the tool body may also have other shapes, and for example be formed of multiple segments of different shapes.

According to other embodiments, the reflecting structure comprises at least one coolant reflecting channel having an inlet arranged to receive coolant emerging from the exit opening in the tool body, and an outlet located such as to direct coolant passing through the coolant reflecting channel at least partly rearward and towards the cutting insert or the seat for accommodating a cutting insert. Thereby, the coolant may be more precisely directed rearward in a specific direction, i.e. preferably towards the cutting insert. The coolant reflecting channel may include a first and a second channel segment. The channel segments may be straight. The first channel segment, extending from the inlet, may extend mainly in an axial direction, and the second channel segment, following the first channel segment and extending to the outlet, may extend mainly in a radial, but rearward inclined, direction, such that coolant emerging from the outlet is directed at least partly rearward and towards the cutting insert.

According to some embodiments, the turning tool comprises two cutting inserts, arranged on opposite sides of the peripheral surface. Even though both cutting inserts cannot be engaged simultaneously in a cutting process, such turning tool may provide increased productivity since the inserts can be used sequentially in a cutting process, potentially reducing the number of tool changes required to machine a certain geometry. For such embodiments, the reflecting structure, if not arranged to evenly distribute coolant around the peripheral surface of the tool body, may be configured to reflect coolant in two specific directions, i.e. rearward and towards each of the two cutting inserts. According to other embodiments, the coolant reflector may include two separate reflecting structures, wherein one reflecting structure is arranged to reflect coolant towards one of the cutting inserts, and the other reflecting structure is arranged to reflect coolant towards the other cutting insert.

A chip space may be formed in the peripheral surface of the tool body, adjacent the seat for accommodating a cutting insert. Moreover, according to some embodiments, at least a part of the peripheral surface of the tool body comprises at least one chip flute. Chip flutes are not commonly used on turning tools, but the inventors have found that the chip evacuation effect provided by the coolant reflector is further improved by having a chip flute arranged in the peripheral surface of the tool body of the turning tool. Such a chip flute may extend towards the rear end of the tool body from the chip space located adjacent the cutting insert. The chip flute may not extend all the way to the rear end of the tool body, but only as far as required for efficiently evacuating the chips all the way out of the hole. For turning tools having multiple cutting inserts, one chip flute is preferably arranged for each cutting insert. The chip flutes may be straight, i.e. extending rearward along the peripheral surface in a direction parallel with the central axis, or helical, i.e. extending rearward spiraling around the peripheral surface at a helix angle.

According to some embodiments, the coolant reflector is detachably arranged at the tool body. Thereby, the coolant reflector may be selectively used only in applications when it is beneficial. For other applications, for example when machining close to a bottom surface of a hole (i.e. where a coolant reflector might limit the accessibility of the tool), the coolant reflector may be removed.

According to another aspect, the invention relates to a coolant reflector for use in a turning tool according to any of the embodiments disclosed herein, wherein the coolant reflector is arrangeable at a front end of a tool body of the turning tool and comprises a reflecting structure arranged to receive coolant emerging from an exit opening in the tool body and reflect the coolant at least partly rearward and towards a cutting insert arranged in the tool body.

Accordingly, the invention not only relates to a turning tool comprising a coolant reflector but also to the coolant reflector as such, which can be manufactured as a separate unit adapted to be selectively used together with a turning tool body.

### BRIEF DESCRIPTION OF DRAWINGS

The solution will now be described in more detail by means of exemplary embodiments and with reference to the accompanying drawings, in which:
Figs. 1A - 1C illustrate a turning tool including a coolant reflector according to a first embodiment.
Figs. 2A - 2C illustrate a turning tool including a coolant reflector according to a second embodiment.
Figs. 3A - 3B illustrate a coolant reflector for a turning tool according to a third embodiment.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

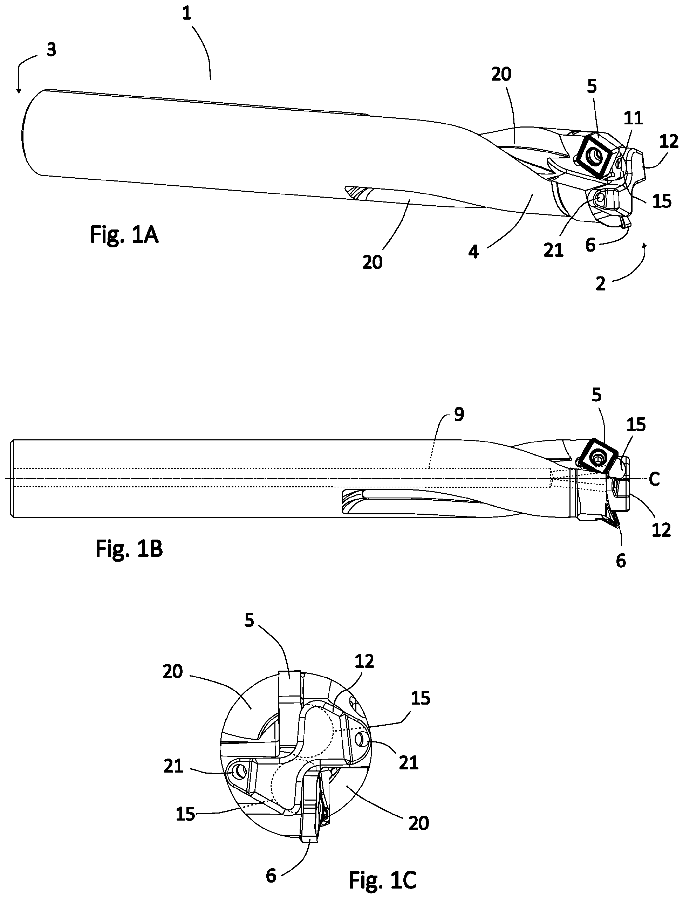

Figs. 1A - 1C illustrate a turning tool according to a first embodiment. Fig. 1A is a perspective view of the turning tool and Fig. 1B is a side view. The turning tool comprises a tool body 1 having a front end 2 and a rear end 3. A central axis C extends longitudinally from the front end 2 to the rear end 3. The tool body 1 has two insert seats in which cutting inserts 5, 6 are mounted. The turning tool is intended for internal machining inside a hole of a rotating workpiece. The tool body comprises two chip flutes 20, one for each cutting insert, for facilitating chip evacuation towards the rear end, out of the machined hole. Fig. 1C is a front view of the turning tool as seen along the central axis C towards the front end 2.

A coolant channel 9, illustrated in dashed lines in Fig. 1B, is formed by a first portion extending centrally within the tool body along the central axis C and two inclined portions extending from the first portion towards respective exit openings 11 (of which one is seen in Fig. 1A) in the front end 2.

The turning tool further comprises a coolant reflector 12 arranged at the front end 2 of the tool body 1 such that a bottom contact surface of the coolant reflector 12 is situated flush against the front end 2. The coolant reflector has two through holes 21 (best seen in Fig. 1C) via which the coolant reflector is connected to the tool body 1 using fastening elements, such as screws (not shown). The coolant reflector has two reflecting structures in the form of recesses 15 having concave rearward facing surfaces (of which only one is visible in Figs 1A and 1B, whereas both are indicated by dashed lines in Fig. 1C). The recesses 15 are arranged at the border of the contact surface of the coolant reflector, thus forming a passageway for coolant emerging from the outlets 11. Thus, coolant will be received at the concave surfaces in the recesses 15 and reflected at least partly rearward and towards the respective cutting inserts 5 and 6. Each concave rearward facing surface has the shape of a portion of the inner surface of a sphere.

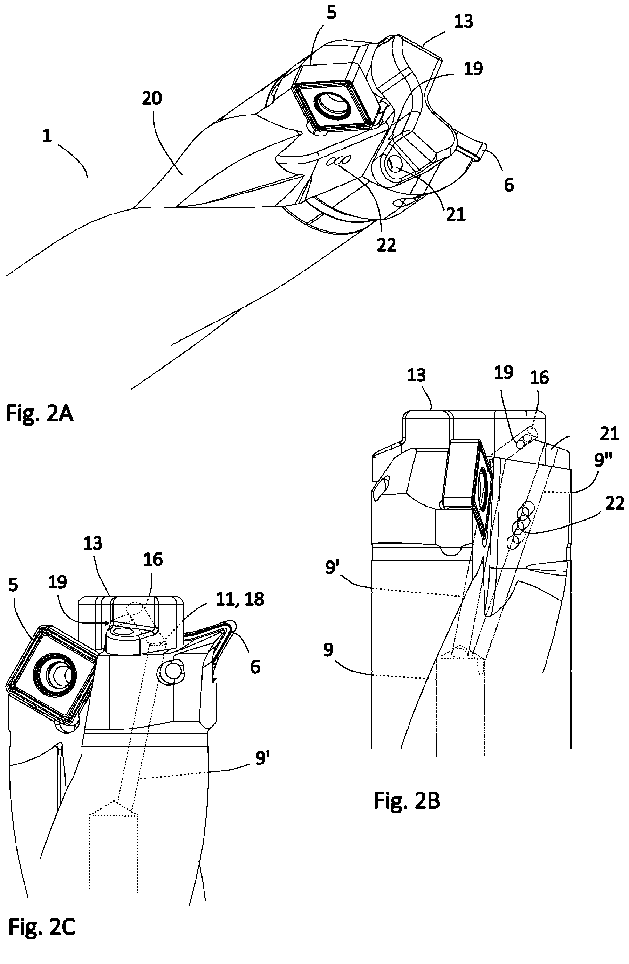

Figs. 2A - 2C illustrate a front part of a turning tool according to a second embodiment. Fig. 2A is a perspective view and 2B and 2C are side views from different directions. According to this second embodiment, a coolant reflector 13 is arranged at the front end of the tool body 1 in a corresponding way as in the embodiment illustrated in Figs. 1A-1C, for example using screws extending through the holes 21 in the coolant reflector. The coolant reflector 13 is arranged flush against the front end of the tool body 1, and comprises two reflecting structures in the form of coolant reflecting channels 16 (of which one is illustrated in dashed lines in Figs. 2B and 2C). Each coolant reflecting channel 16 has an inlet 18 and an outlet 19. The inlet 18 is arranged to receive coolant emerging from the exit opening 11 of the coolant channel 9 inside the tool body 1. Thus, the exit opening 11 is arranged directly adjacent the inlet 18, providing a non-interrupted flow of coolant from the coolant channel 9 in the tool body 1 to the coolant reflecting channel 16 in the coolant reflector. The outlets 19 of the coolant reflecting channels 16 are arranged such that coolant is directed therefrom at least partly rearward and towards respective ones of the cutting inserts 5, 6.

As seen in Figs. 2B and 2C, each coolant reflecting channel 16 comprises two channel segments - a first segment extending forward from the inlet 18 into the coolant reflector, and a second segment extending rearward from the first portion to the outlet 19. Such segments of the coolant reflecting channel may be formed by drilling. In other embodiments, the coolant reflecting channel 16 could be formed by a single curved channel, which could be achieved for example if manufacturing the coolant reflector by additive manufacturing methods.

Similar to the embodiment illustrated in Figs. 1A-1C, the coolant channel 9 in the tool body comprises two separate inclined portions 9' (of which one is illustrated in Figs. 2B and 2C), extending from a centrally extending portion to respective exit openings 11. Moreover, in this embodiment the coolant channel 9 also comprises two additional portions 9" (of which one is illustrated in Fig. 2B) extending from the centrally extending portion of the coolant channel 9 to respective sets of secondary outlets 22, wherein each set 22 in the illustrated embodiment comprises three outlets. The coolant channel portions 9" conveying coolant to the secondary outlets 22 extend to the holes 21 used for mounting the coolant reflector to the tool body. The end sections of the coolant channel portions 9", adjacent the front end 2 of the tool body 1, may be threaded such that a screw extending through the hole 21 and into the portion 9" of the coolant channel 9 may in effect both fix the coolant reflector to the front end of the tool body and also close the open end of the coolant channel portion 9". Thereby, coolant that is conveyed through the coolant channel 9 will emerge from the outlets 19 in the coolant reflector (via the exit opening 11 and the reflecting structure 16) and from the secondary outlets 22 in the tool body.

The secondary outlets 22 are arranged such that coolant emerging therefrom is directed at least partly rearward into the chip flutes 20. This will further improve the evacuation of chips rearward. For clarity, the portion 9" of the coolant channel 9 conveying coolant to the secondary outlets 22 is not illustrated in Fig. 2C, but only in Fig. 2B.

Since the coolant reflector is detachably arranged at the front end of the tool body, the coolant reflector may be selectively used only in those applications when it is suitable. As an example, if removing the coolant reflector, but still using screws or other means for plugging the open ends of the coolant channel portions 9", coolant that is conveyed through the coolant channel 9 will emerge forward from the exit openings 11 and rearward from the secondary outlets 22, which could be beneficial in some applications, for example when machining close to the bottom of a closed hole (in which case a coolant reflector might be in the way and the bottom surface of the hole will anyway provide a sufficient coolant reflecting effect). In other applications, where increased flow of coolant in a forward direction is desired, the channel portions 9" could be left open.

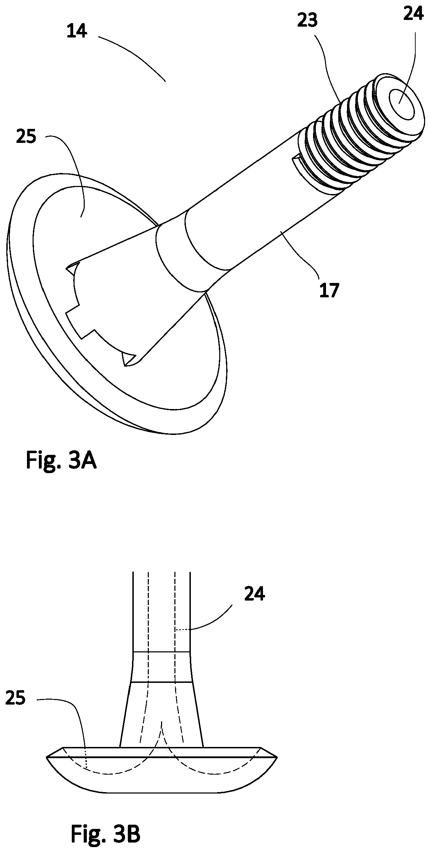

Figs. 3A - 3B illustrate a coolant reflector 14 according to a third embodiment of the invention. Fig. 3A is a perspective view of the coolant reflector and Fig. 3B is a side view of the front portion of the coolant reflector. The coolant reflector 14 may be arranged to a turning tool body similar to the tool bodies illustrated in the first and second embodiments, but where the coolant channel in the tool body preferably includes a portion that extends along the central axis all the way to the front end of the tool body. In other words, the coolant reflector 14 is preferably arranged to a coolant channel emerging at the center of a front end of the tool body, mounted via a threaded connection on a shaft 17 of the coolant reflector. Thereby, an exit opening with which the coolant channel in the tool body is in fluid communication will be directly connected to an internal conduit 24, indicated by dashed lines in Fig. 3B, extending through the shaft 17 of the coolant reflector 14.

The coolant reflector 14 comprises a reflecting structure in the form of a rearward facing concave surface 25.

Thus, in operation, coolant that emerges from an exit opening of a coolant channel in a tool body will be conveyed via the conduit 24 to the reflecting structure 25 and reflected therefrom at least partly rearward and towards one or more cutting inserts arranged at the tool body.

Compared to the embodiments illustrated in Figs. 1A - 1C and Figs. 2A - 2C, the coolant reflector 14 shown in Figs. 3A - 3B will not direct coolant specifically towards the cutting insert(s), but distribute the coolant rearward all along the perimeter of a machined hole (and thus at least partly towards the cutting insert). For many applications this may not necessarily be a disadvantage since chips that need to be evacuated may end up in various locations around the machined surface. Moreover, a coolant reflector 14 as illustrated in Figs. 3A - 3B may be particularly easy to manufacture and versatile since potentially arrangeable to various different turning tool bodies having different shapes.

In the following, the operation of a turning tool according to any of the embodiments disclosed herein will be described. To machine the inner surface of a hole in a workpiece, the turning tool is operated such as to engage the workpiece and moved in a feed direction while the workpiece (not shown) is rotated, thereby machining the inner surface of the hole such that chips of workpiece material are formed. These chips need to be evacuated from the hole. If conveying coolant through the coolant channel inside the tool body while machining, coolant will be directed, via the reflecting structures, rearward towards the cutting inserts. Thereby, in addition to cooling the cutting inserts, the coolant will assist in evacuating the chips rearward out of the hole. The evacuation of chips is further improved by the presence of the chip flutes. The turning tool according to the illustrated embodiments comprises two cutting inserts 5 and 6. The cutting inserts 5, 6 will not engage the workpiece at the same time. Instead, the turning tool may be used for different operations depending on which cutting insert that is brought into contact with the workpiece (i.e. in which radial direction the tool engages the workpiece). For example, the first cutting insert 5 may be used when machining in the forward direction, into the hole, whereas the second cutting insert 6 may be used when machining in a rearward direction, out of the hole. In the embodiments illustrated herein, coolant will be directed, via the reflecting structures, towards both the cutting inserts 5 and 6, irrespective of which of the cutting inserts that is operative.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited.

## Claims

1. A turning tool comprising a tool body (1) including
- a front end (2),
- a rear end (3),
- a peripheral surface (4) connecting the front end (2) and the rear end (3), and
- a central axis (C) extending from the front end (2) to the rear end (3);
wherein the turning tool further comprises
- a cutting insert (5, 6), or a seat for accommodating a cutting insert (5,6), arranged in the tool body (1); and
- a coolant channel (9) extending at least partly through the tool body (1) for supplying coolant to the cutting insert (5, 6), the coolant channel (9) being in fluid communication with an exit opening (11) in the tool body;
wherein the turning tool is **characterized by** further comprising a coolant reflector (12, 13, 14) including a reflecting structure (15, 16, 25) arranged to receive coolant emerging from the exit opening (11) in the tool body (1) and reflect the coolant at least partly rearward and towards the cutting insert (5, 6).

2. A turning tool according to claim 1, wherein the coolant reflector (12, 13, 14) is arranged at the front end (2) of the tool body (1).

3. A turning tool according to any of the previous claims, wherein the cutting insert (5, 6), or the seat for accommodating a cutting insert (5, 6), is arranged in the tool body (1) at an interface between the front end (2) and the peripheral surface (4).

4. A turning tool according to any of the previous claims, wherein the tool body (1) comprises two exit openings (11) with which the coolant channel (9) is in fluid communication, and the coolant reflector (12, 13, 14) comprises a separate reflecting structure (15, 16, 25) for each of the two exit openings (11).

5. A turning tool according to any of the previous claims, wherein the reflecting structure (15, 16, 25) is located in front of the front end (2) of the tool body (1).

6. A turning tool according to any of the previous claims, wherein, with respect to the central axis (C), the coolant reflector (12, 13, 14) extend radially a distance that is less than the maximum radial extension of the tool body (1) at the location along the central axis (C) where the cutting insert (5, 6) or seat for accommodating a cutting insert (5, 6) is arranged.

7. A turning tool according to any of the previous claims, wherein the reflecting structure (15, 16) includes a surface that is oblique to the central axis (C) and inclined towards the rear.

8. A turning tool according to any of the previous claims, wherein the reflecting structure comprises a concave rearward facing surface (15, 25).

9. A turning tool according to any of the previous claims, wherein the coolant reflector (14) includes a shaft (17) extending in the axial direction between, and connecting, the front end of the tool body and the reflecting structure (15, 16, 25).

10. A turning tool according to any of the previous claims, wherein the reflecting structure comprises at least one coolant reflecting channel (16) having an inlet (18) arranged to receive coolant emerging from the exit opening (11) in the tool body (1), and an outlet (19) located such as to direct coolant passing through the coolant reflecting channel (16) at least partly rearward and towards the cutting insert (5, 6) or the seat for accommodating a cutting insert (5, 6).

11. A turning tool according to any of the previous claims, wherein at least a part of the peripheral surface (4) of the tool body (1) comprises a chip flute (20).

12. A turning tool according to any of the previous claims, wherein the coolant reflector (12, 13, 14) is detachably arranged at the tool body (1).

13. A coolant reflector (12, 13, 14) for use in a turning tool according to any of the claims 1-12, wherein the coolant reflector (12, 13, 14) is arrangeable at a front end (2) of a tool body (1) of the turning tool and comprises a reflecting structure (15, 16, 25) arranged to receive coolant emerging from an exit opening (11) in the tool body (1) and reflect the coolant at least partly rearward and towards a cutting insert (5, 6) arranged in the tool body (1).
